# EUROPÄISCHE PATENTANMELDUNG

(11) **EP 2 617 946 A2**
(43) Veröffentlichungstag der Anmeldung: **24.07.2013**
(21) Anmeldenummer: 13151545.4
(22) Anmeldetag: 17.01.2013
(51) Int. Cl.: F01D 5/26, F01D 5/32

(54) **System zur Vorgabe einer Einbauposition von Laufschaufeln, Sicherungselement, Laufschaufel, Turbomaschine sowie Verfahren**

(30) Priorität: 23.01.2012 DE 102012200891
(71) Anmelder: MTU Aero Engines GmbH, 80995 München (DE)
(72) Erfinder: Wöhler, Marcus, Dr., 82178 Puchheim (DE)

(57) **Zusammenfassung**

Offenbart ist ein System (22) zur Vorgabe einer Einbauposition von benachbarten Laufschaufeln (2, 4) einer Schaufelreihe einer Turbomaschine, mit einer Vielzahl von axialen Sicherungselementen (24), die zumindest zwei Abschnitte (30a, 30b) mit unterschiedlichen Profilbereichen (26a, 26b) zur jeweiligen Anordnung zwischen einem Nutgrund (14) einer Rotorwelle (10) und einem Schaufelfuß (6a, 6b) haben, die durch einen Verbindungssteg (32) im Nutabstand miteinander verbunden sind, und mit schaufelfußseitigen Gegenkonturen (28a, 28b) zur jeweiligen Bildung eines Formschlusspaares mit den Profilbereichen (26a, 26b), ein Sicherungselement und eine Laufschaufel für ein derartiges System, eine Turbomaschine mit einem Rotor mit einem derartigen System, und ein Verfahren zur Herstellung eines derartigen Rotors.

## Beschreibung

Die Erfindung betrifft ein System zur Vorgabe einer Einbauposition von benachbarten Laufschaufeln einer Schaufelreihe einer Turbomaschine, ein Sicherungselement für ein derartiges System, eine Laufschaufel für ein derartiges System, eine Turbomaschine und ein Verfahren zur Herstellung eines Rotors.

Bei schnelldrehenden Turbomaschinen wie bei Flugzeugtriebwerken ist stets eine Schwingungsanregung des Rotorsystems zu beachten. Die Schwingungsanregung erfolgt durch eine Fluid-Strukturwechselwirkung, die bei bestimmten Betriebsbedingungen zu Resonanzen führen kann, was eine strukturmechanische Integrität einer Laufbeschaufelung gefährdet. Zur Minimierung von Anregungsmechanismen des Rotorsystems können benachbarte Laufschaufeln eines montierten Rotorverbundes durch unterschiedliche Schaufelblattgeometrien verstimmt werden. Da eine fehlerhafte Positionierung der unterschiedlichen Schaufelblattprofilen zueinander zu einer nachteiligen Schwingungsanregung des Rotorsystems und somit zu einer Zerstörung des Rotorsystems führen kann, erfordert eine Frequenzverstimmung auch eine bestimmte, insbesondere wechselnde Anordnung der Laufschaufeln zueinander. Bekannte, bspw. in den Druckschriften CH 360 073 A und US 3,076,634 A gezeigte Elemente zur Positionierung von Laufschaufeln an Rotornaben ermöglichen zwar eine axiale Sicherung der Laufschaufeln in Rotornuten, jedoch verhindern sie keine fehlerhafte Positionierung von benachbarten Laufschaufeln zueinander, so dass durch die bekannten Elemente die sicherheitsrelevante Funktion der wechselnden Anordnungen einer Frequenzverstimmung nicht gewährleistet ist.

Aufgabe der Erfindung ist es, ein System zur Vorgabe einer Einbauposition von benachbarten Laufschaufeln einer Schaufelreihe einer Turbomaschine zu schaffen, das eine einfache Montage von Laufschaufeln zur Frequenzverstimmung ermöglicht. Des Weiteren ist es Aufgabe der Erfindung, ein Sicherungselement und eine Laufschaufel für ein derartiges System zu schaffen, eine Turbomaschine mit einer hohen Laufruhe, sowie ein Verfahren zur Herstellung eines Rotors für eine derartige Turbomaschine zu schaffen.

Diese Aufgabe wird gelöst durch ein System mit den Merkmalen des Patentanspruchs 1, durch ein Sicherungselement mit den Merkmalen des Patentanspruchs 9, durch eine Laufschaufel mit den Merkmalen des Patentanspruchs 10, durch eine Turbomaschine mit den Merkmalen des Patentanspruchs 11 und durch ein Verfahren mit den Merkmalen des Patentanspruchs 13.

Ein erfindungsgemäßes System zur Vorgabe einer Einbauposition von benachbarten Laufschaufeln einer Schaufelreihe einer Turbomaschine hat eine Vielzahl von axialen Sicherungselementen, die zumindest zwei Abschnitte mit unterschiedlichen Profilbereichen zur jeweiligen Anordnung zwischen einem Nutgrund einer Rotorwelle und einem Schaufelfuß haben, die durch einen Verbindungssteg im Nutabstand miteinander verbunden sind. Zudem weist das System schaufelfußseitige Gegenkonturen zur jeweiligen Bildung eines Formschlusspaares mit den Profilbereichen auf.

Durch das erfindungsgemäße System können Laufschaufeln mit unterschiedlichen Schaufelblattprofilen schnell und verlässlich in der richtigen Position zueinander an einer Rotorwelle montiert werden. Jeder der Profilbereiche erlaubt die Positionierung nur einer Gegenkontur, so dass bei entsprechender Zuordnung der Gegenkonturen zu den Laufschaufeln automatisch eine wechselnde Anordnung der jeweils unterschiedlichen Schaufelblattprofile eingehalten wird. Durch die Formschlüssigkeit der unterschiedlichen Profilbereiche mit den Gegenkonturen wird die wechselnde Anordnung verwechslungsfrei sichergestellt. Somit wird durch das erfindungsgemäße System eine effektive Lösung zur Gewährleistung der sicherheitsrelevanten Funktion der Frequenzverstimmung beim Aufbau beschaufelter Rotoren geschaffen. Zudem bewirkt der Formschluss zwischen den sicherungselementenseitigen Profilbereichen und den schaufelseitigen Gegenkonturen eine mechanische Kopplung der jeweils benachbarten Laufschaufeln, was eine Schwingungsdämpfung bewirkt. Durch die Verbindung der Abschnitte im Nutabstand zueinander können die Sicherungselemente einfach in den Rotornuten positioniert werden. Ferner sind durch die Integration der Profilbereiche in die axialen Sicherungselemente keine zusätzlichen Elemente zu axialen Sicherung der Laufschaufeln notwendig.

Zur axialen Sicherung der Laufschaufeln können die Abschnitte verbreiterte Verriegelungsabschnitte haben, die radial nach außen gegen eine Stirnfläche der Schaufelfüße und eine Axialfläche der Rotorwelle biegbar sind.

Zur Gewichtsreduzierung der Sicherungselemente kann der jeweilige Verbindungssteg gegenüber den Abschnitten verjüngt sein. Zudem kann der Verbindungssteg zur Verbesserung der axialen Sicherung der Laufschaufeln radial nach außen gegen eine Stirnfläche der Schaufelfüße biegbar sein.

Die Profilbereiche und Gegenkonturen sind fertigungstechnisch einfach herstellbar, wenn die Profilbereiche als Erhebungen und die Gegenkonturen als Längsvertiefungen ausgebildet sind. Die Erhebungen haben zur Vermeidung von scharfkantigen Konturen vorzugsweise eine kreisförmige Querschnittsfläche bzw. eine schalenartige oder eine konische Mantelfläche, können jedoch grundsätzlich auch als Pyramiden, Stege und drgl. mit einer andersartigen Querschnittsfläche ausgebildet sein.

Die Herstellung der Profilbereiche lässt sich weiter vereinfachen, wenn die Erhebungen plastische Umformungen der Abschnitte und in Querrichtung nebeneinander angeordnet sind. Durch die plastischen Umformungen können die Sicherungselemente einstückig bzw. einteilig ausgebildet sein. Durch die Anordnung der Abschnitte in Querrichtung nebeneinander können die Längsvertiefungen in axialer Richtung durchlaufend in die Schaufelfüße eingebracht sein und müssen nicht eine bestimmte Länge aufweisen.

Das System kann eine einfach wirkende Montagekontrolle in der Art aufweisen, dass die zumindest zwei Formschlusspaare unterschiedliche Breiten b1, b2 aufweisen.

Das System kann jedoch auch eine einfach wirkende Montagekontrolle in der Art aufweisen, dass die zumindest zwei Formschlusspaare unterschiedliche Höhen h1, h2 aufweisen.

Um bei unerwartet großen Bauteiltoleranzen eine richtige Zuordnung der Laufschaufeln verlässlich zu gewährleisten, kann es jedoch vorteilhaft sein, wenn das System eine doppelt wirkende Montagekontrolle aufweist und hierzu beispielsweise die breiten Formschlusspaare flacher als die schmalen Formschlusspaare ausgebildet sind.

Ein erfindungsgemäßes Sicherungselement für ein erfindungsgemäßes System hat zumindest zwei Abschnitte zur jeweiligen Anordnung zwischen einem Nutgrund und einem Schaufelfuß, die unterschiedliche Profilbereiche aufweisen und durch einen Verbindungssteg im Nutabstand miteinander verbunden sind. Ein derartiges Sicherungselement ist einfach bspw. durch einen Stanzprozess aus einem Metallblech mit präzise ausgebildeten Profilbereichen herzustellen.

Eine erfindungsgemäße Laufschaufel für ein erfindungsgemäßes System hat eine Gegenkontur zum formschlüssigen Zusammenwirken mit jeweils einem Profilbereich eines axialen Sicherungselementes. Die Gegenkontur ist fertigungstechnisch einfach und präzise in die Laufschaufel einzubringen und ermöglicht eine genaue Zuordnung der Laufschaufel zu den mit den Sicherungselementen bestückten Rotornuten.

Eine erfindungsgemäße Turbomaschine hat einen Rotor, der mit einem erfindungsgemäßen System versehen ist. Eine derartige Turbomaschine zeichnet sich durch eine kurze Rotormontage und durch eine hohe Laufruhe aus, da Laufschaufeln mit unterschiedlichen Schaufelblattprofilen einer Schaufelreihe zur Frequenzverstimmung verwechselungsfrei nebeneinander angeordnet werden können. Zudem wirkt sich positiv auf die Laufruhe aus, dass durch die Sicherungselemente bzw. durch die Formschlusspaare die Laufschaufeln zumindest paarweise mechanisch miteinander gekoppelt werden, was schwingungsdämpfend wirkt.

Die Laufruhe lässt sich weiter verbessern, wenn die Sicherungselemente als Wuchtgewichte wirken. Aufgrund ihrer Anordnung in den Rotornuten sind die Sicherungselemente drehachsennah angeordnet, wodurch mit bereits kleinen Massen eine hohe Wuchtwirkung erzielt wird.

Bei einem erfindungsgemäßen Verfahren zur Herstellung eines Rotors werden vor einer Laufschaufelmontage axiale Sicherungselemente mit ihren Abschnitten in Rotornuten positioniert und dann Laufschaufeln anhand ihrer mit abschnittsseitigen Profilbereichen der Sicherungselemente formschlüssig zusammenwirkenden Gegenkonturen den Rotornuten zugeordnet. Die Sicherungselemente lassen sich wesentlich einfacher in den Rotornuten positionieren als die Laufschaufeln, so dass durch das erfindungsgemäße Verfahren bereits frühzeitig beim Einsetzen der Laufschaufeln in die Rotornuten eine Fehlpositionierung erkannt wird. Aufgrund der zumindest zwei Abschnitte ist es dabei möglich, die Sicherungselemente bei gleicher Ausbildung beliebig nebeneinander anzuordnen. Eine besondere Anordnung der Sicherungselemente nebeneinander ist nicht notwendig.

Sonstige vorteilhafte Ausführungsbeispiele der Erfindung sind Gegenstand weiterer Unteransprüche.

Im Folgenden werden bevorzugte Ausführungsbeispiele der Erfindung anhand stark vereinfachter schematischer Darstellungen näher erläutert. Es zeigen:
- Figur 1: eine Draufsicht auf einen Ausschnitt eines Rotors einer Turbomaschine im Bereich einer Laufschaufelreihe,
- Figur 2: eine Draufsicht auf ein erfindungsgemäßes axiales Sicherungselement,
- Figur 3: einen Querschnitt durch das Sicherungselement,
- Figur 4: einen ersten Längsschnitt durch das Sicherungselement,
- Figur 5: einen zweiten Längsschnitt durch das Sicherungselement,
- Figur 6: eine Draufsicht auf erfindungsgemäße Gegenkonturen,
- Figur 7: eine Draufsicht auf das Sicherungselement im montierten Zustand, und
- Figur 8: eine Seitenansicht des Sicherungselementes im montierten Zustand.

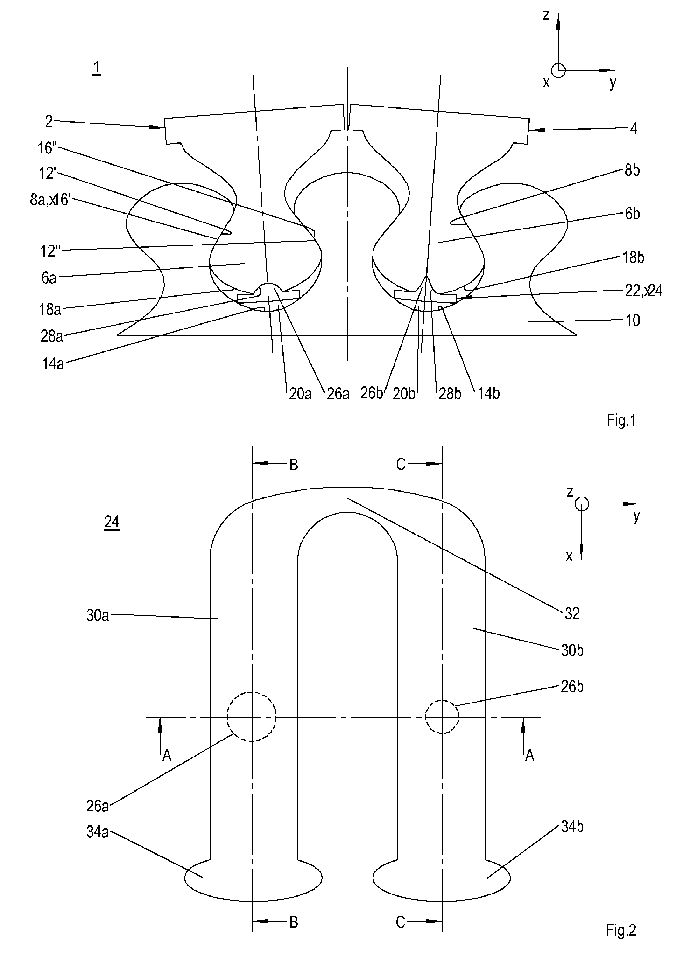

Figur 1 zeigt einen Ausschnitt eines Rotors 1 einer Turbomaschine im Bereich einer Laufschaufelreihe. Die Turbomaschine ist insbesondere ein Flugzeugtriebwerk und die Laufschaufelreihe ist beispielsweise im Turbinenbereich angeordnet. Selbstverständlich kann die Laufschaufelreihe auch verdichterseitig, bspw. im Niederdruckverdichter positioniert sein. Sie hat eine Vielzahl von in Umfangsrichtung nebeneinanderliegenden Laufschaufeln 2, 4, die mit ihren Schaufelfüßen 6a, 6b in jeweils einer Rotornut 8a, 8b einer Rotorwelle 10 eingesetzt sind.

Die Rotornuten 8a, 8b haben jeweils einen identischen Querschnitt. Wie durch die Bezifferung der gemäß der Ansicht in Figur 1 linken Rotornut 8a ersichtlich, haben die Rotornuten 8a, 8b jeweils zwei gegenüberliegende seitliche Nutflächen 12', 12", die über einen radial inneren Nutgrund 14a, 14b miteinander verbunden sind und radial nach außen aufeinander zulaufend orientiert sind.

Die Schaufelfüße 6a, 6b haben im Prinzip jeweils einen Querschnitt, der entsprechend dem Querschnitt der Rotornuten 8a, 8b ausgebildet ist. Wie durch die Bezifferung des linken Schaufelfußes 6a verdeutlicht, haben die Schaufelfüße 6a, 6b jeweils zwei entgegengesetzte Seitenflächen 16', 16", die radial nach innen auseinanderlaufend orientiert sind und formschlüssig mit den seitlichen Nutflächen 12', 12" zusammenwirken. Zudem haben die Schaufelfüße 6a, 6b jeweils eine Bodenfläche 18a, 18b, die die Seitenflächen 16', 16" miteinander verbinden. Im montierten bzw. eingesetzten Zustand der Laufschaufeln 2, 4 ist zwischen den Nutgründen 14a, 14b und den Bodenflächen 18a, 18b ein sich in Längsrichtung x sichelförmig erstreckender Hohlraum 20a, 20b gebildet.

Zur Erzielung einer Frequenzverstimmung weisen die Laufschaufeln 2, 4 unterschiedliche Schaufelblattprofile auf. Zur wechselnden Anordnung von den jeweils unterschiedlichen Schaufelblattprofilen ist ein System 22 zur Vorgabe einer Einbauposition der benachbarten Laufschaufeln 2, 4 und insbesondere einer wechselnden Anordnung der Laufschaufeln 2, 4 vorgesehen. Das System 22 weist eine Vielzahl von axialen Sicherungselementen 24 mit zumindest zwei unterschiedlichen Profilbereichen 26a, 26b und mit einer Vielzahl von schaufelseitigen Gegenkonturen 28a, 28b zum formschlüssigen Zusammenwirken mit jeweils einem der Profilbereiche 26a, 26b auf. Die Sicherungselemente 24 sind multifunktional und dienen neben einer Vorgabe einer Einbauposition der Laufschaufeln 2, auch zur axialen Sicherung der Laufschaufeln 2, 4 in den Rotornuten 8a, 8b und optional als Wuchtgewichte zur Auswuchtung des Rotors 1.

Wie in der Draufsicht in Figur 2 zu erkennen, sind die Sicherungselemente 24 U-förmig ausgebildet. Sie sind einteilig und bestehen aus einem hochtemperaturfesten Metall. Insbesondere sind sie aus einem ebenen Metallblech gestanzt oder geschnitten. Sie haben jeweils zwei sich in Längsrichtung x parallel erstreckende Abschnitte 30a, 30b zur Anordnung in den Hohlräumen 20a, 20b sowie jeweils einen die Abschnitte 30a, 30b miteinander verbindenden Verbindungssteg 32.
Grundsätzlich sind jedoch auch mehr als zwei Abschnitte 30a, 30b pro Sicherungselement 24 möglich. Beispielsweise können auch drei oder vier Abschnitte 30a, 30b vorgesehen sein, wobei dann jedoch zur Abbildung eines Rotorradius eine Biegung der Sicherungselemente 24 in Umfangsrichtung bevorzugt wird.

Zudem haben die Sicherungselemente 24 jeweils zwei Verriegelungsabschnitte 34a, 34b. Die Verriegelungsabschnitte 34a, 34b sind entfernt von dem Verbindungssteg 32 an den Abschnitten 30a, 30b angebunden und gegenüber diesen verbreitert.

Die Profilbereiche 26a, 26b sind vorzugsweise in Längsrichtung x und in Querrichtung y mittig auf den Abschnitten 30a, 30b angeordnet. Sie sind als integrale Erhebungen der Abschnitte 30a, 30b ausgebildet, wobei sie bevorzugterweise gemäß der Darstellung in Figur 2 sich in Hochrichtung z erstreckende plastische Umformungen sind.

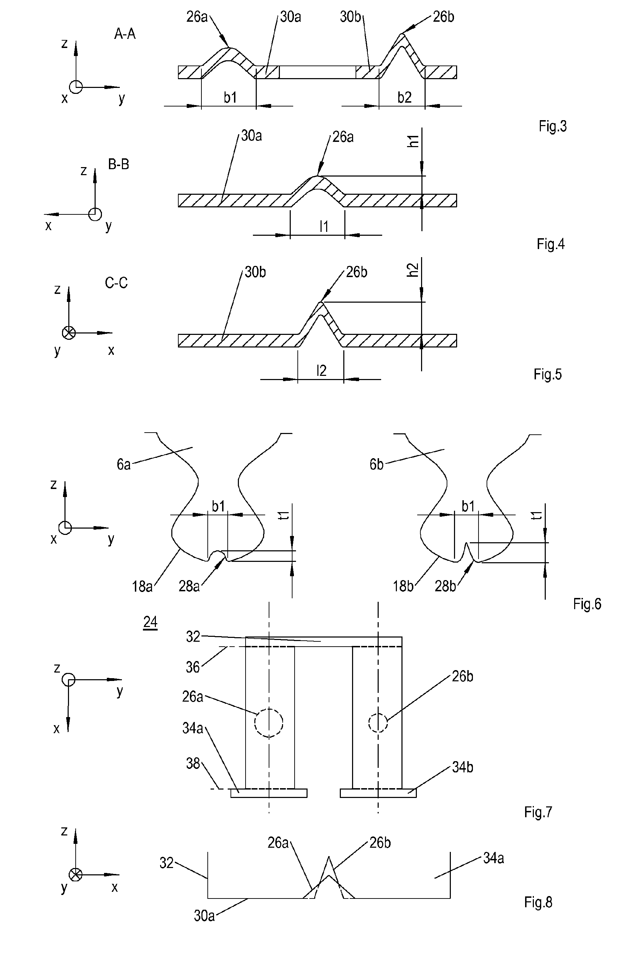

Wie in dem Querschnitt entlang der Linie A-A in Figur 3 und in dem Längsschnitt entlang der Linie B-B in Figur 4 gezeigt, hat die Erhebung 26a des linken Abschnitts 30a eine Breite b1, eine Länge 11 und eine Höhe h1. Die Breite b1 ist gleich der Länge 11, so dass die Erhebung 26a eine beulenartige bzw. schalenartige Form hat.

Wie in dem Querschnitt entlang der Linie A-A in Figur 3 und in dem Längsschnitt entlang der Linie C-C in Figur 5 gezeigt, hat die rechte Erhebung 26b eine Breite b2, eine Länge 12 und eine Höhe h2. Die Breite b2 ist gleich der Länge 12, jedoch ist die Höhe h2 wesentlich größer als die Breite b2 und die Länge 12, so dass die rechte Erhebung 26b im Prinzip eine dornenartige bzw. konische Form hat.

Wie in Figur 6 gezeigt, sind die Gegenkonturen 28a, 28b als Längsvertiefungen ausgebildet, die in die Bodenflächen 18a, 18b der Schaufelfüße 6a, 6b eingebracht sind und diese zur vereinfachten Montage in Längsrichtung x durchsetzen. Sie bilden mit den Profilbereichen 26a, 26b jeweils ein Formschlusspaar und haben hierzu entsprechend komplementäre geometrische Abmessungen. So weisen die Längsvertiefungen 28a, 28b jeweils eine Breite auf, die gleich den Breiten b1, b2 der Profilbereiche 26a, 26b ist. Zudem hat die linke Längsvertiefung 28a eine Tiefe t1, die gleich der Höhe h1 der Erhebung 26a ist. Die rechte Längsvertiefung 28b hat entsprechend eine Tiefe t2, die gleich der Höhe h2 der Erhebung 26b ist.

Bevorzugte Größen zur Dimensionierung der Formschlusspaare 26a, 28a und 26b, 28b sind die Breiten b1, b2 und die Höhen h1, h2 bzw. t1, t2, wobei zur Bildung einer doppelt wirkenden Montagekontrolle insbesondere die Beziehungen b1 > b2 und h1 < h2 bzw. t1<t2 gelten. Diese geometrischen Beziehungen zugrundeliegend, sind die breiten Formschlusspaare 26a, 28a flacher als die schmalen Formschlusspaare 26b, 28b bzw. die schmalen Formschlusspaare 26b, 28b höher als die breiten Formschlusspaare 26a, 28a. Die Längen 11, 12 sind insbesondere dann von Bedeutung, wenn die Längsvertiefungen 28a, 28b nicht durchlaufend sind, sondern eine Erstreckung in Längsrichtung x haben, die einem Längsabstand der Profilbereiche 26a, 26b von den Verriegelungsabschnitten 34a, 34b entspricht.

Wie in den Figuren 7 und 8 gezeigt, sind der jeweilige Verbindungssteg 32 sowie die Verriegelungsabschnitte 34a, 34b um jeweils eine in Querrichtung y verlaufende Biegeachse 36, 38 in Richtung der Erhebungen 26a, 26b abwinkelbar. Hierdurch liegen der jeweilige Verbindungssteg 32 und die Verriegelungsabschnitte 34a, 34b der Sicherungselemente nach der Montage der Laufschaufeln 2, 4 an entgegengesetzten Stirnflächen der Schaufelfüße 6a, 6b und an entgegengesetzten Axialflächen der Rotorwelle formschlüssig an, wodurch eine Axialsicherung der Laufschaufeln 2, 4 an der Rotorwelle 10 erfolgt.

Bei einem erfindungsgemäßen Verfahren zur Herstellung eines Rotors 1 werden vor einer Montage der Laufschaufeln 2, 4 die axialen Sicherungselemente 24 mit ihren Abschnitten 30a, 30b derart in den Rotornuten 8a, 8b positioniert, dass die Profilbereiche 26a, 26b radial nach außen zeigen. Sollten die Sicherungselemente 24 auch als Wuchtgewichte wirken, wird eine Anordnung der Sicherungselemente 24 entsprechend ihren Massen nebeneinander beachtet. Bei der Ausrichtung der Sicherungselemente 24 in Längsrichtung x ist es grundsätzlich möglich, diese so anzuordnen, dass ihre Verriegelungsabschnitte 34a, 34b einen stromabwärtigen Bereich bilden. Ebenso können die Verbindungsstege 32 den stromabwärtigen Bereich bilden. Die Ausrichtung der Sicherungselemente 24 in Längsrichtung x sollte jedoch bei einer Laufschaufelreihe nicht geändert werden.

Nach der Positionierung der Sicherungselemente 24 in den Rotornuten 8a, 8b werden die Laufschaufeln 2, 4 derart in die Rotornuten 8a, 8b eingeschoben, dass jeweils eine formschlüssige Verbindung zwischen einem Profilbereich 26a, 26b und einer Gegenkontur 28a, 28b geschaffen wird. Nach dem Einsetzen der Laufschaufeln 2, 4 in die Rotornuten 8a, 8b und somit nach dem wechselnden Positionieren unterschiedlicher Schaufelblattprofile werden die Verbindungsstege 32 und die Verriegelungsabschnitte 34a, 34b zur axialen Sicherung der Laufschaufeln 2, 4 in den Rotornuten 8a, 8b um die Biegeachsen 36, 38 radial nach außen gebogen und in Anlage mit den entgegengesetzten Stirnflächen der Schaufelfüße 6a, 6b sowie den entgegengesetzten Axialflächen der Rotorwelle 10 gebracht.

Offenbart ist ein System zur Vorgabe einer Einbauposition von benachbarten Laufschaufeln einer Schaufelreihe einer Turbomaschine, mit einer Vielzahl von axialen Sicherungselementen, die zumindest zwei Abschnitte mit unterschiedlichen Profilbereichen zur jeweiligen Anordnung zwischen einem Nutgrund einer Rotorwelle und einem Schaufelfuß haben, die durch einen Verbindungssteg im Nutabstand miteinander verbunden sind, und mit schaufelfußseitigen Gegenkonturen zur jeweiligen Bildung eines Formschlusspaares mit den Profilbereichen, ein Sicherungselement und eine Laufschaufel für ein derartiges System, eine Turbomaschine mit einem Rotor mit einem derartigen System, und ein Verfahren zur Herstellung eines derartigen Rotors.

### Bezugszeichenliste

- 1: Rotor
- 2: Laufschaufel
- 4: Laufschaufel
- 6a, b: Schaufelfuß
- 8a, b: Rotornut
- 10: Rotorwelle
- 12', 12": seitliche Nutfläche
- 14: Nutgrund
- 16', 16": Seitenfläche
- 18a, b: Bodenfläche
- 20a, b: Hohlraum
- 22: System
- 24: Sicherungselement,
- 26a,b: Profilbereich
- 28a,b: Gegenkontur
- 30a, b: Abschnitt
- 32: Verbindungssteg
- 34a, b: Verriegelungsabschnitt
- 36: Biegeachse
- 38: Biegeachse

- b1, b2: Breite
- 11, 12: Länge
- h1, h2: Höhe
- t1, t2: Tiefe
- x: Längsrichtung
- y: Querrichtung
- z: Hochrichtung

## Patentansprüche

1. System (22) zur Vorgabe einer Einbauposition von benachbarten Laufschaufeln (2, 4) einer Schaufelreihe einer Turbomaschine, mit einer Vielzahl von axialen Sicherungselementen (24), die zumindest zwei Abschnitte (30a, 30b) mit unterschiedlichen Profilbereichen (26a, 26b) zur jeweiligen Anordnung zwischen einem Nutgrund (14) einer Rotorwelle (10) und einem Schaufelfuß (6a, 6b) haben, die durch einen Verbindungssteg (32) miteinander verbunden und im Nutabstand zueinander positioniert sind, und mit schaufelfußseitigen Gegenkonturen (28a, 28b) zur jeweiligen Bildung eines Formschlusspaares mit den Profilbereichen (26a, 26b), **dadurch gekennzeichnet, dass** der erste Profilbereich (26a) auf dem ersten Abschnitt (30a) angeordnet ist und der zweite Profilbereich (26b) auf dem zweiten Abschnitt (30b) angeordnet ist, wobei die beiden Profilbereiche unterschiedlich geformt sind.

2. System nach Anspruch 1 oder 2, wobei die Abschnitte (30a, 30b) verbreiterte Verriegelungsabschnitte (34a, 34b) haben, die radial nach außen gegen eine Stirnfläche der Schaufelfüße (6a 6b) und eine Axialfläche der Rotorwelle (10) biegbar sind.

3. System nach Anspruch 1 oder 2, wobei der Verbindungssteg (32) gegenüber den Abschnitten (30a, 30b) verjüngt ist und radial nach außen gegen eine Stirnfläche der Schaufelfüße (6a, 6b) biegbar ist.

4. System nach Anspruch 1, 2 oder 3, wobei die Profilbereiche (26a, 26b) Erhebungen und die Gegenkonturen (28a, 28b) Längsvertiefungen sind.

5. System nach Anspruch 4, wobei die Erhebungen (26a, 26b) plastische Umformungen der Abschnitte (30a, 30b) und in Querrichtung (y) nebeneinander angeordnet sind.

6. System nach Anspruch 4 oder 5, wobei die zumindest zwei Formschlusspaare (26a, 28b, 26b, 28b) unterschiedliche Breiten (b1, b2) aufweisen.

7. System nach Anspruch 4 oder 5, wobei die zumindest zwei Formschlusspaare (26a, 28b, 26b, 28b) unterschiedliche Höhen (h1, h2) aufweisen.

8. System nach Anspruch 6 oder 7, wobei die die breiten Formschlusspaare (26a, 28a) flacher als die schmalen Formschlusspaare (26b, 28b) sind.

9. Axiales Sicherungselement (24) für ein System (22) nach einem der vorhergehenden Ansprüche, mit zumindest zwei Abschnitten (30a, 30b) zur jeweiligen Anordnung zwischen einem Nutgrund (14) und einem Schaufelfuß (6a, 6b), die unterschiedliche Profilbereiche (26a, 26b) aufweisen, und die durch einen Verbindungssteg (32) im Nutabstand miteinander verbunden sind.

10. Laufschaufel für ein System nach einem der Ansprüche 1 bis 8, mit einer Gegenkontur (28a, 28b) zum formschlüssigen Zusammenwirken mit einem Profilbereich (26a, 26b) eines axialen Sicherungselementes (24).

11. Turbomaschine, mit einem Rotor (1) mit einem System (22) nach einem der Ansprüche 1 bis 8.

12. Turbomaschine nach Anspruch 11, wobei axiale Sicherungselemente (24) als Wuchtgewichte wirken.

13. Verfahren zur Herstellung eines Rotors (1) für eine Turbomaschine nach einem der Ansprüche 11 und 12, wobei vor einer Laufschaufelmontage axiale Sicherungselemente (24) mit Abschnitten (30a, 30b) in Rotornuten (8a, 8b) positioniert und dann Laufschaufeln (2, 4) anhand ihrer mit abschnittsseitigen Profilbereichen (26a, 26b) der Sicherungselemente (24) formschlüssig zusammenwirkenden Gegenkonturen (28a, 28b) den Rotornuten (8a, 8b) zugeordnet werden.
